# Europäisches Patentamt

# European Patent Office

# Office européen des brevets

(11) Veröffentlichungsnummer: **0 182 327**
**B1**

(12) **EUROPÄISCHE PATENTSCHRIFT**

(45) Veröffentlichungstag der Patentschrift:
**08.06.88**

(51) Int. Cl.⁴: **F 15 D 1/02, F 16 K 47/14**

(21) Anmeldenummer: **85114595.3**

(22) Anmeldetag: **16.11.85**

(54) Vorrichtung zur drosselnden Durchflussbegrenzung in Wasser-Armaturen.

(30) Priorität: **22.11.84 DE 3442495**

(43) Veröffentlichungstag der Anmeldung:
**28.05.86 Patentblatt 86/22**

(45) Bekanntmachung des Hinweises auf die Patenterteilung:
**08.06.88 Patentblatt 88/23**

(84) Benannte Vertragsstaaten:
**AT BE CH DE FR GB IT LI NL SE**

(56) Entgegenhaltungen:
**US-A-2 454 929**
**US-A-2 775 984**
**US-A-4 457 343**

(73) Patentinhaber: **Hans Grohe GmbH & Co. KG,
Auestrasse 9, D-7622 Schiltach (DE)**

(72) Erfinder: **Buzzi, Günter, Am Häberlesberg 11,
D-7622 Schiltach (DE)**

(74) Vertreter: **Patentanwälte Ruff und Beier,
Neckarstrasse 50, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur drosselnden Durchflußbegrenzung in Wasser-Armaturen, insbesondere Sanitär-Armaturen, mit einem aus einem elastischen Material bestehenden, sich gegen eine Ringschulter abstützenden Drosseleinsatz, der eine Durchflußdurchbrechung aufweist, die zuflußseitig von einer Regel-Lippe begrenzt ist, die den Eintrittsquerschnitt der Durchflußdurchbrechung in Abhängigkeit von dem Druck des durchfließenden Wassers verkleinert bzw. vergrößert. Eine solche Vorrichtung ist in der DE-A-1 650 209 beschrieben.

Bei den bisher bekannten derartigen Vorrichtungen treten insbesondere im Bereich höherer Förderdrücke unproportionale Regellippen-Verformungen auf. Außerdem sind sie schwierig zu montieren oder aber im Betrieb zu laut.

Der Erfindung liegt die Aufgabe zugrunde, eine Vorrichtung der eingangs beschriebenen Art dahingehend zu verbessen, daß sie auch im Bereich höherer Förderdrücke den Durchfluß durch eine Rohrleitung gleichmäßig drosselt, und die sich problemlos montieren und austauschen läßt. Außerdem soll eine relativ große Regelöffnung vorhanden sein, die nicht durch kleine im Wasser mitgeführte Schmutzpartikel verstopft werden kann.

Diese Aufgabe wird durch eine Vorrichtung der eingangs beschriebenen Art gelöst, bei der der Drosseleinsatz zu einer senkrecht zu seiner Durchflußbegrenzung liegenden Ebene symetrisch ausgebildet ist und sowohl zuflußseitig als auch abflußseitig mit einer ringförmigen Regel-Lippe versehen ist. Ein so ausgebildeter Drosseleinsatz bietet zudem den Vorteil, daß er wegen seiner symetrischen Ausbildung nicht falsch eingesetzt werden kann. Wie Versuche gezeigt haben, kann ein derartiger Drosseleinsatz auch geräuscharm ausgebildet werden. Weiterhin wirken die symetrisch gestalteten beidseitigen Regel-Lippen im Betrieb asymetrisch.

Als besonders vorteilhaft weil besonders geräuscharm und anpassungsfähig arbeitend haben sich Drosseleinsätze erwiesen, die einen Durchflußkanal aufweisen, dessen Durchmesser im unbelasteten Zustand beidseitig vorzugsweise stufenlos von außen nach innen hin zunimmt und darunter insbesondere solche, bei denen die Innenwandung des Durchflußkanales bzw. der Durchflußdurchbrechung im Längsschnitt bogenförmig, vorzugsweise kreisbogenförmig gewölbt ausgebildet ist, sodaß sich ein balliger oder tonnenförmiger Durchgang ergibt, der an seinen beiden Öffnungen von den Regel-Lippen begrenzt ist.

Bei einer bevorzugten Ausführungsform ist der Drosseleinsatz im wesentlichen ringförmig ausgebildet und auf beiden Stirnseiten mit einer zur Durchflußdurchbrechung konzentrischen Ringnut versehen. Teile der Ringnutwandung bilden dabei die Außenwand der zuflußseitigen bzw. abflußseitigen Regel-Lippe, wobei die Bereiche des Drosseleinsatzes, die die Übergänge von den Ringnuten zur Durchflußdurchbrechung bilden, vorzugsweise einen Querschnitt aufweisen, der jeweils im wesentlichen dem eines Keiles mit einem Keilwinkel von 35° bis 50° entspricht. Die kleineren Winkel, d. h. der untere Grenzbereich eignet sich mehr für große Bohrungen und große Durchflüsse, wogegen die größeren Keilwinkel eher bei engen Durchflußbohrungen mit entsprechend kleineren Durchflußmengen vorgesehen sind. Keilwinkel von 35 bis 40° erlauben eine große relative Verengung des Durchflußkanales, da die Regel-Lippe stärker umgelegt werden kann.

Die Außenseite der Regel-Lippen sind vorzugsweise jeweils dem Mantel eines Kegelstumpfes entsprechend ausgebildet, dessen Symetrieachse in Durchflußrichtung verläuft. Dieser Kegel stumpf reicht vorzugsweise bis in den Grund der jeweiligen Ringnut.

Die der Strömung zugewandte Seite der Regel-Lippen ist vorzugsweise jeweils aus der Querschnittsebene heraus entgegen der Zuströmrichtung um circa 20 bis 40, vorzugsweise 30° geneigt ausgebildet, wodurch eine geräuscharme und rasch auf Druckschwankungen reagierende Drosselung ermöglicht wird. Keilwinkel und Neigung können durch Variation so aufeinander abgestimmt werden, daß gewünschte Kennlinien der Drosselwirkung erfüllt werden.

Bei einer bevorzugten Ausführungsform ist dem Drosseleinsatz ein Stützring zugeordnet, der den Drosseleinsatz abflußseitig und radial abstützt. Dieser Stützring kann eine Auflageschulter aufweisen, die dem abflußseitigen Profil der Ringnut des Drosseleinsatzes im wesentlichen angepaßt ist und in diese hineinragt. Der Stützring ist dabei so ausgebildet, daß seine Auflageschulter den keilförmigen Teil der abflußseitigen Regel-Lippe im undurchströmten Zustand im wesentlichen unabgestützt läßt. Zur Strömungsberuhigung und damit verbundener Geräuschdämpfung kann der Stützring abflußseitig wenigstens ein Strömungsleitelement aufweisen, das mit ihm vorzugsweise einstückig ausgebildet ist. Bei einer bevorzugten Ausführungsform ist dieses Strömungsleitelement eine gelochte Grundplatte.

Der Drosseleinsatz kann mit dem ihm zugeordneten Stützring eine in eine Wasser-Armatur einsetzbare, beispielsweise einschiebbare Einheit bilden, die als solche auch vom Laien problemlos ohne Zuhilfenahme irgendwelcher Werkzeuge ausgewechselt werden kann. Auch können mehrere, eine verschiedene Drosselwirkung besitzende Drosseleinsätze vorgesehen sein, deren am Stützring zur Anlage kommenden Begrenzung jeweils gleich sind, sodaß sie je nach den vorliegenden Druck- und Strömungsbedingungen auswählbar und in den Stützring einsetzbar sind. Die Außenflächen der Regel-Lippen schließen mit der Mantelfläche des Drosseleinsatzes einen Winkel von vorzugsweise 50 bis 80° ein.

Weitere Einzelheiten, Merkmale und Vorteile der Erfindung ergeben sich aus den Ansprüchen und der nachfolgenden Beschreibung bevorzugter Ausführungsformen im Zusammenhang mit der Zeichnung.

In der Zeichnung zeigen jeweils schematisch:

Fig. 1 eine geschnittene Seitenansicht eines Drosseleinsatzes,

Fig. 2 eine geschnittene Seitenansicht eines dem Drosseleinsatz nach Fig. 1 zugeordneten Stützringes,

Fig. 3 die abflußseitige Ansicht des in Fig. 2 dargestellten Stützringes,

Fig. 4 eine geschnittene Seitenansicht des in Fig. 1 dargestellten Drosseleinsatzes und des diesen umgebenden Stützringes,

Fig. 5 den zuflußseitigen Teil einer Wasser-Armatur, in die ein von einem Stützring abflußseitig und radial abgestützter Drosseleinsatz eingesetzt ist, jeweils in geschnittener Seitenansicht und

Fig. 6 eine geschnittene Seitenanschicht eines Drosseleinsatzes in eine vom Drosseleinsatz nach Fig. 1 abgewandelten Ausführungsform.

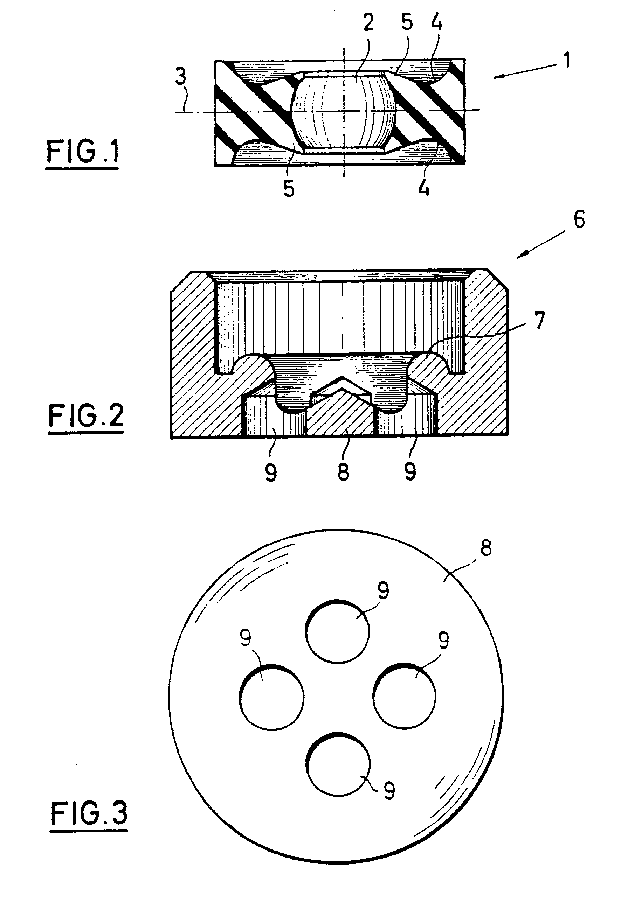

Der in Fig. 1 in geschnittener Seitenansicht dargestellte Drosseleinsatz 1 aus elastomerem Material weist eine zentrale, einen Durchflußkanal 2 bildende Durchbrechung auf und ist im wesentlichen ringförmig und dabei zu einer senkrecht zu seiner Durchbrechung liegenden Ebene 3 symetrisch ausgebildet. Auf seinen beiden Stirnseiten weist der Drosseleinsatz 1 jeweils eine zum Durchflußkanal 2 konzentrische Ringnut 4 auf. Die Wandung des Durchflußkanales 2 des Drosseleinsatzes 1 ist bei der in Fig. 1 dargestellten Ausführungsform kreisbogenförmig gewölbt ausgebildet, mit der Folge, daß der Innendurchmesser des tonnenartigen Durchflußkanales 2 beidseitig stufenlos von außen nach innen hin zunimmt. Die Übergänge von den stirnseitigen Ringnuten 4 zum Durchflußkanal 2 bilden jeweils Regel-Lippen 5, die einen im wesentlichen keilförmigen Querschnitt aufweisen. Ihr Keilwinkel liegt vorzugsweise zwischen 35 und 50°. Wie dies aus Fig. 1 deutlich hervorgeht, sind die Außenseiten der beiden Regel-Lippen 5 jeweils dem Mantel eines Kegelstumpfes entsprechend ausgebildet, der bis zum Grund der jeweiligen Ringnut 4 reicht. Dabei ist der Drosseleinsatz 1 auch rotationssymetrisch aufgebaut. Seine Bauhöhe ist im Verhältnis zum Außendurchmesser gering. Sie beträgt etwa 1/4 bis 3/4, vorzugsweise 1/3 bis 1/2 des Außendurchmessers und liegt insbesondere im Größenbereich des Durchmessers des Durchflußkanales 2. Vorzugsweise überragen die Außenränder der Nuten 4 die Regel-Lippen 5 in axialer Richtung.

Dem in Fig. 1 in geschnittener Seitenansicht dargestellten Drosseleinsatz 1 ist ein Stützring 6 zugeordnet, der in Fig. 2 in geschnittener Seitenansicht dargestellt ist.

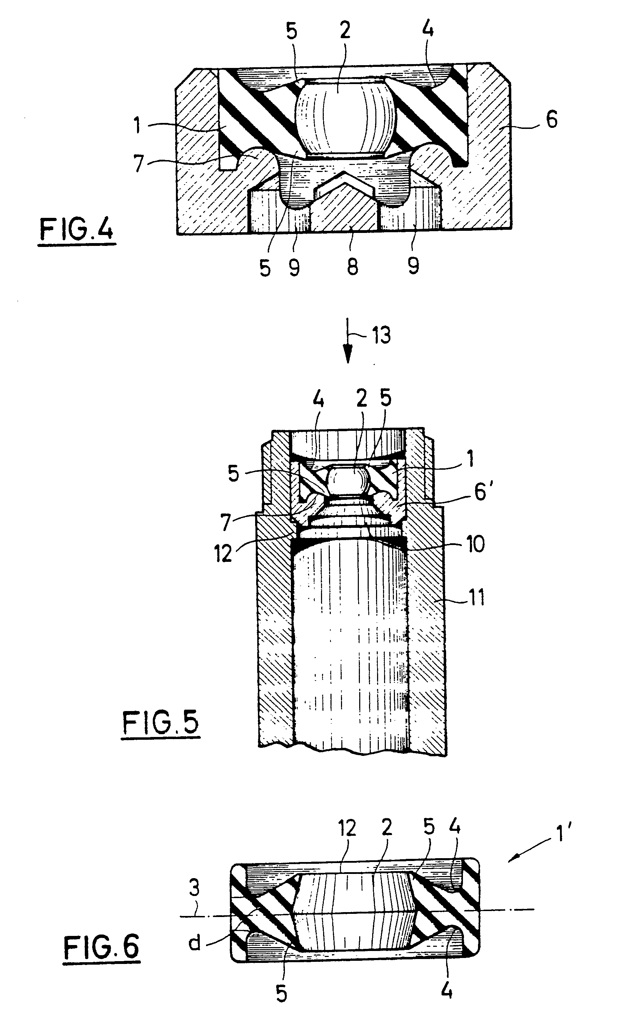

Dieser Stützring 6 ist so bemessen und ausgebildet, daß er den Drosseleinsatz 1 sowohl abflußseitig als auch vorzugsweise radial abstützt. Er weist eine Auflageschulter 7 auf, die der abflußseitigen Ringnut 4 des Drosseleinsatzes 1 im wesentlichen angepaßt ist und dann, wenn der Drosseleinsatz 1 in den Stützring 6 eingesetzt ist (vgl. Fig. 4) in diese Ringnut 4 ragt. Die Auflageschulter 7 ist dabei so bemessen und ausgebildet, daß sie den keilförmigen Teil der abflußseitigen Regel-Lippe 5 im undurchströmten Zustand im wesentlichen unabgestützt läßt.

Der Stützring 6 weist abflußseitig ein Strömungsleitelement 8 auf, das bei der dargestellten Ausführungsform von einer mit vier Löchern 9 versehenen Grundplatte gebildet wird, deren Zentrum verschlossen ist und den aus dem Drosseleinsatz kommenden Wasserstrom mit einer keilförmigen bzw. kegelförmigen Erhebung teilt. Das Strömungsleitelement bewirkt eine zusätzliche Beruhigung des Wasserstromes und dient auch zur geeigneten Anströmung nachfolgender Strahlformungselemente, z. B. von Stahlbelüftern. Der in Fig. 5 dargestellte Stützring 6' weist kein derartiges Strömungsleitelement auf. Dieser Stützring 6' ist vielmehr abflußseitig mit einer zentralen, sich dreistufig erweiternd ausgebildeten Durchflußöffnung 10 versehen.

Der Stützring 6 bzw. 6' bildet mit dem in ihn eingesetzten Drosseleinsatz 1 eine kompakte Einheit, die sich problemlos in das zuflußseitige Ende einer Wasser-Armatur, beispielsweise den Griff einer Handbrause (vgl. Fig. 5) bis zum Anschlag an eine dort vorgesehene Ringschulter 12 einschieben läßt, woraufhin die Wasser-Armatur mit einer Wasser-Zuführleitung, beispielsweise mit einem Rohr oder Schlauch verbunden werden kann. Ist dies geschehen, so kann der Wasser-Armatur 11 Wasser in Richtung des Pfeiles 13 zugeführt werden. Bei geringem Wasserdruck bildet dabei der Drosseleinsatz 1 ein Hindernis, das in seiner Drosselwirkung mit einer Lochscheibe vergleichbar ist. Nimmt der Wasserdruck zu, so hat dies zur Folge, daß die zuflußseitige Regel-Lippe 5 des Drosseleinsatzes 1 unter dem Druck des durchströmenden Wassers nach innen gezogen, d. h. so verformt wird, daß sie den Eintrittsquerschnitt des Durchflußkanales 2 mehr oder weniger stark, d. h. Abhängigkeit vom jeweiligen Wasserdruck verkleinert. Die abflußseitge Regel-Lippe 5 des Drosseleinsatzes 1 wird dagegen bei zunehmendem Wasserdruck mehr oder weniger stark nach außen gebogen und bildet eine elastische weiche Begrenzung, so daß sich das den Drosseleinsatz 1 verlassende Wasser ohne besondere Geräuschentwicklung entspannen kann.

Der in Fig. 6 in geschnittener Seitenansicht dargestellte Drosseleinsatz 1 ist für eine Durchflußmenge von 2,75 gall/min ausgelegt und unterscheidet sich von dem in der Fig. 1 dargestellten Drosseleinsatz 1 im wesentlichen dadurch, daß bei ihm die Wandung des Durchflußkanales 2 im Längsschnitt nicht bogenförmig, sondern von außen nach innen hin geradlinig gegenläufig konisch verläuft.

Bei der Ausführungsform nach Fig. 1 sind die Einfluß- und Ausflußöffnungen des Durchflußkanales 2 zylindrisch angefast, d. h. der Scheitel, der im Querschnitt keilförmigen Regel-Lippen 5 ist unter Bildung einer zylindrischen Innenfläche abgeschnitten. Bei der in Fig. 6 dargestellten Ausführungsform sind dagegen die Einfluß- und Ausflußöffnungen des Durchflußkanales 2 jeweils von einer Kante 12 begrenzt, die von der jeweiligen Scheitellinie gebildet wird.

Bei der Ausführungsform nach Fig. 6 ist die Lippenwurzel d dünner gehalten, wodurch die Beweglichkeit der Regel-Lippen erhöht wird.

**Patentansprüche**

1. Vorrichtung zur drosselnden Durchflußbegrenzung in Wasser-Armaturen (11), insbesondere Sanitär-Armaturen, mit einem aus einem elastischen Material bestehenden, sich gegen eine Ringschulter (7) abstützenden Drosseleinsatz (1), der eine Durchflußdurchbrechung (2) aufweist, die zuflußseitig von einer Regel-Lippe (5) begrenzt ist, die den Eintrittsquerschnitt der Durchflußdurchbrechung (2) in Abhängigkeit von dem Druck des durchfließenden Wassers verkleinert bzw. vergrößert, dadurch gekennzeichnet, daß der Drosseleinsatz (1) zu einer senkrecht zu seiner Durchflußdurchbrechung (2) liegenden Ebene (3) symmetrisch ausgebildet ist und sowohl zuflußseitig als auch abflußseitig mit einer ringförmigen Regel-Lippe (5) versehen ist.

2. Vorrichtung nach Anspruch 1, dadurch gekennzeichnet, daß der Drosseleinsatz (1) einen Durchflußkanal (2) aufweist, dessen Innendurchmesser beidseitig vorzugsweise stufenlos von außen nach innen hin zunimmt.

3. Vorrichtung nach einem der vorhergehenden Ansprüche, dadurch gekennzeichnet, daß die Wandung der Durchflußdurchbrechung (2) im Längsschnitt bogenförmig, vorzugsweise kreisbogenförmig gewölbt, ausgebildet ist.

4. Vorrichtung nach Anspruch 2, dadurch gekennzeichnet, daß die Wandung des Durchflußkanales (2) in Längsrichtung beidseitig von außen nach innen hin geradlinig gegenläufig konisch verläuft.

5. Vorrichtung nach einem der vorhergehenden Ansprüche, dadurch gekennzeichnet, daß der Drosseleinsatz (1) im wesentlichen ringförmig ausgebildet ist und auf beiden Stirnseiten eine zur Durchflußdurchbrechung (2) konzentrische Ringnut (4) aufweist, wobei die Bereiche des Drosseleinsatzes (1), die die Übergänge von den Ringnuten (4) zur Durchflußdurchbrechung (2) bilden, vorzugsweise einen Querschnitt aufweisen, der jeweils im wesentlichen dem eines Keiles mit einem Keilwinkel von 35 bis 50° entspricht.

6. Vorrichtung nach Anspruch 5, dadurch gekennzeichnet, daß die Außenseite der Regel-Lippen (5) jeweils dem Mantel eines Kegelstumpfes entsprechend ausgebildet ist, wobei der Kegelstumpf vorzugsweise bis in den Grund der Ringnut (4) reicht.

7. Vorrichtung nach einem der vorhergehenden Ansprüche, dadurch gekennzeichnet, daß die der Strömung zugewandte Seite der Regel-Lippen (5) jeweils aus der Querschnittsebene heraus entgegen der Zuströmrichtung um ca. 20 bis 40, vorzugsweise 30°, geneigt ist.

8. Vorrichtung nach einem der Ansprüche 5 bis 7, dadurch gekennzeichnet, daß dem Drosseleinsatz (1) ein Stützring (6) zugeordnet ist, der den Drosseleinsatz (1) abflußseitig und vorzugsweise auch radial abstützt, wobei der Stützring (6) eine Auflageschulter (7) aufweist, die dem abflußseitigen Profil der Ringnut (4) des Drosseleinsatzes (1) im wesentlichen angepasst ist und in diese ragt und die Auflageschulter (7) den keilförmigen Teil der abflußseitigen Regel-Lippe (5) im undurchströmten Zustand im wesentlichen unabgestützt läßt.

9. Vorrichtung nach Anspruch 8, dadurch gekennzeichnet, daß der Stützring (6) abflußseitig wenigstens ein Strömungsleitelement (8) aufweist, das mit ihm vorzugsweise einstückig ausgebildet ist, wobei das Strömungsleitelement vorzugsweise eine gelochte Grundplatte (8) ist.

10. Vorrichtung nach Anspruch 9, dadurch gekennzeichnet, daß der Stützring (6') eine sich stufenweise erweiternde Durchflußöffnung (10) aufweist.

11. Vorrichtung nach einem der Ansprüche 9 oder 10, dadurch gekennzeichnet, daß der Drosseleinsatz (1) und der ihm zugeordnete Stützring (6, 6') eine kompakte, in eine Armatur (11) einschiebbare Einheit bilden.

**Claims**

1. Apparatus for throttling flow limitation in water fittings (11), particularly sanitary fittings, with a throttling insert (1) made from an elastic material and which bears against an annular shoulder (7), having a flow opening (2), which is bounded on the inflow side by a regulating lip (5), which increases or decreases the entry cross-section of the flow opening (2) as a function of the pressure of the water flowing through, characterized in that the throttling insert (1) is constructed symmetrically to a plane (3) perpendicular to its flow opening (2) and is provided on both the inflow side and the outflow side with an annular regulating lip (5).

2. Apparatus according to claim 1, characterized in that the throttling insert (1) has a flow channel (2), whose internal diameter increases, preferably continuously from the outside to the inside on both sides.

3. Apparatus according to one of the preceding claims, characterized in that the wall of the flow opening (2) is constructed in a curved, preferably arcuate manner in longitudinal section..

4. Apparatus according to claim 2, characterized in that the wall of the flow channel (2) in the longitudinal direction passes on either side from the outside to the inside in a linear conical manner in opposite directions.

5. Apparatus according to one of the preceding claims, characterized in that the throttling insert (1) is constructed in a substantially annular manner and has on both end faces an annular slot (4) concentric to the flow opening (2), the areas of the throttling insert (1) forming the transitions from the annular slots (4) to the flow opening (2) preferably have a cross-section in each case substantially corresponding to that of a wedge with a wedge angle of 35 to 50°.

6. Apparatus according to claim 5, characterized in that the outside of the regulating lips (5) is in each case constructed corresponding to the circumferential surface of a truncated cone, the truncated cone preferably extending into the bottom of the annular slot (4).

7. Apparatus according to one of the preceeding claims, characterized in that the flow-facing side of the regulating lips (5) in each case slopes by approximately 20 to 40°, preferably 30°, out of the cross-sectional plane counter to the inflow direction.

8. Apparatus according to one of the claims 5 to 7, characterized in that a thrust ring (6) is associated with the throttling insert (1) and supports the latter on the outflow side and is preferably also radially supported, the thrust ring (6) having a bearing shoulder (7) substantially adapted to the outflow-side groove profiling of the throttling insert (1) and projects into the latter and the bearing shoulder (7) leaves the wedge-like part of the outflow-side regulating lip (5) substantially unsupported.

9. Apparatus according to claim 8, characterized in that on the out-flow-side, the thrust ring (6) has at least one flow guidance member (8), preferably constructed in one piece therewith, the flow guidance member preferably being a perforated base plate (8).

10. Apparatus according to claim 9, characterized in that the thrust ring (6') has a through-flow opening (10) widening in step-like manner.

11. Apparatus according to claims 9 or 10, characterized in that the throttling insert (1) and the thrust ring (6, 6') associated therewith form a compact unit, which can be inserted into a water fitting (11).

**Revendications**

1. Dispositif de limitation de débit, avec effet d'étranglement, dans des robinetteries d'eau (11), en particulier des robinetteries sanitaires, présentant une pièce d'étranglement (1) insérée qui consiste en un matériau élastique, prend appui contre un épaulement annulaire (7) et est munie d'un perçage d'écoulement (2) délimité, côté admission, par une lèvre de régulation (5) qui diminue ou, respectivement, augmente la section d'entrée du perçage d'écoulement (2) en fonction de la pression de l'eau en circulation, caractérisé par le fait que la pièce d'étranglement (1) insérée présente une réalisation symétrique par rapport à un plan (3) s'étendant perpendiculairement à son perçage d'écoulement (2), et est pourvue d'une lèvre annulaire de régulation (5), tant du côté amont que du côté aval.

2. Dispositif selon la revendication 1, caractérisé par le fait que la pièce d'étranglement (1) insérée présente un canal d'écoulement (2) dont le diamètre interne croît de part et d'autre, de l'extérieur vers l'intérieur, de préférence sans transitions.

3. Dispositif selon l'une des revendications précédentes, caractérisé par le fait que la paroi du perçage d'écoulement (2) est de réalisation arquée en coupe longitudinale, de préférence avec bombement en arc de cercle.

4. Dispositif selon la revendication 2, caractérisé par le fait que la paroi du canal d'écoulement (2) s'étend de façon conique de part et d'autre dans le sens longitudinal, de l'extérieur vers l'intérieur, et de manière rectiligne dans des sens opposés.

5. Dispositif selon l'une des revendications précédentes, caractérisé par le fait que la pièce d'étranglement insérée (1) est pour l'essentiel de réalisation annulaire et comporte, dans ses deux faces extrêmes, une gorge annulaire (4) concentrique au perçage d'écoulement (2), les régions de la pièce d'étranglement (1) insérée qui forment les transitions entre les gorges annulaires (4) et le perçage d'écoulement (2) possédant, de préférence, une section correspondant à chaque fois, pour l'essentiel, à celle d'un coin à angle de dépouille angulaire de 35 à 50°.

6. Dispositif selon la revendication 5, caractérisé par le fait que la face externe des lèvres de régulation (5) est à chaque fois de réalisation correspondant à l'enveloppe d'un tronc de cône, ce tronc de cône s'étendant de préférence jusque dans le fond de la gorge annulaire (4).

7. Dispositif selon l'une des revendications précédentes, caractérisé par le fait que le côté des lèvres de régulation (5) qui est tourné dans le sens du flux est à chaque fois incliné au-delà du plan de la section, à l'opposé de la direction d'admission, d'environ 20 à 40, de préférence de 30°.

8. Dispositif selon l'une des revendications 5 à 7, caractérisé par le fait qu'une bague d'appui (6), associée à la pièce d'étranglement (1) insérée, soutient cette pièce du côté sortie et, de préférence également dans le sens radial, la bague d'appui (6) présentant un épaulement de contact (7) qui est pour l'essentiel adapté au profil du côté aval de la gorge annulaire (4) de la pièce d'étranglement (1) insérée, et pénètre dans cette gorge, l'épaulement de contact (7) n'assurant pour l'essentiel, en condition de non-écoulement, aucun soutien de la partie angulaire de la lèvre de régulation (5) située côté aval.

9. Dispositif selon la revendication 8, caractérisé par le fait que la bague d'appui (6) comporte, côté aval, au moins un élément (8) directeur de flux qui est réalisé de préférence d'un seul tenant avec cette bague, l'élément directeur de flux étant de préférence constitué par une plaque de fond perforée (8).

10. Dispositif selon la revendication 9, caractérisé par le fait que la bague d'appui (6') est percée d'un orifice d'écoulement (10) s'élargissant par échelons.

11. Dispositif selon l'une des revendications 9 ou 10, caractérisé par le fait que la pièce d'étranglement insérée (1) et la bague d'appui (6, 6') qui lui est associée forment un ensemble unitaire compact, pouvant être introduit dans une robinetterie d'eau (11).

FIG.1

FIG.2

FIG.3

FIG.4

FIG.5

FIG.6